# EUROPÄISCHE PATENTANMELDUNG

(11) **EP 0 569 001 A1**
(43) Veröffentlichungstag der Anmeldung: **10.11.1993**
(21) Anmeldenummer: 93107313.4
(22) Anmeldetag: 05.05.1993
(51) Int. Cl.: C08L 67/00, C08L 67/04, C08L 77/12, C08L 67/03

(54) **Mischungen aus flüssigkristallinen Copolymeren und Polyarylaten**

(30) Priorität: 05.05.1992 DE 4214411
(71) Anmelder: HOECHST AKTIENGESELLSCHAFT, D-65926 Frankfurt am Main (DE)
(72) Erfinder: Römer, Michael, Dr., W-6080 Gross-Gerau (DE); Schleicher, Andreas, Dr., W-6141 Einhausen (DE)

(57) **Zusammenfassung**

Es werden Polymerlegierungen beschrieben, die 45 - 97 Gew.-% eines flüssigkristallinen aromatischen Polyesters und 3 - 55 Gew.-% eines aromatischen Polyarylesters enthalten, der insbesondere aus aromatischen Dicarbonsäure-Einheiten und Diphenol-Einheiten sowie gegebenenfalls Carbonat-Einheiten aufgebaut ist.

## Beschreibung

Die Synthesen und Eigenschaften flüssigkristalliner Copolyester und Copolyesteramide sind seit zirka 15 Jahren Gegenstand einer Vielzahl von Veröffentlichungen. Ein gängiges Verfahren zu ihrer Herstellung ist die Schmelzkondensation der Ausgangsverbindungen (US 4,161,470; US 3,637,595), das eine hohe Reinheit und ein hohes Molekulargewicht der Polymere gewährleistet.

In jüngster Zeit hat das Interesse an flüssigkristallinen Polyestern noch zugenommen, wie das Erscheinen einer Reihe von Publikationen, z.B. von EP 394 813A und EP 390 489A zeigt.

Alle diese Veröffentlichungen wiesen auf die außergewöhnlichen mechanischen und rheologischen Eigenschaften der Materialien hin. Hervorzuheben sind dabei insbesondere die guten mechanischen Zugeigenschaften in Fließrichtung sowie die hervorragenden Fließfähigkeiten bei hohen Scherraten. Beide Phänomene sind auf die mechanische Orientierbarkeit solcher Systeme zurückzuführen. Dies führt jedoch auch zu einer Anisotropie der mechanischen Eigenschaften, die in vielen Fällen die Anwendung solcher Materialien erschwert. Es besteht daher die Aufgabe, die Anisotropie flüssigkristalliner Polymere in geeigneter Art und Weise zu verringern.

Aus der Literatur ist nun bekannt, daß durch Polymerlegierungen die Einstellung wichtiger mechanischer Eigenschaften möglich ist. Man ist bis heute jedoch weit davon entfernt die Eigenschaften von Polymerlegierungen gesichert vorherzusagen, so daß das Mischen verschiedener Polymerer weitgehend empirisch bleibt.

Die Erfindung beruht auf der überraschenden Beobachtung, daß durch den Zusatz von amorphen Polyarylestern zu flüssigkristallinen Copolyestern oder Copolyesteramiden deren Anisotropie verringert wird.

Es wurde nunmehr eine Polymerlegierung mit einem Gehalt an einem flüssigkristallinen aromatischen Polyester gefunden, die dadurch gekennzeichnet ist, daß sie aus 45-97 Gew.-% des flüssigkristallinen aromatischen Polyesters und 3 bis 55 Gew.-% (bezogen auf die Summe der Polyester) eines amorphen Polyarylesters besteht.
Die in den Mischungen gemäß der Erfindung eingesetzten flüssigkristallinen Polymere sind vollaromatische Polyester mit anisotropen Schmelzen und weisen mittlere Molekulargewichte (Mw = Gewichtsmittel) von 2000 bis 200 000, bevorzugt von 3500 bis 50 000 und besonders bevorzugt von 4000 bis 30 000 g/mol auf.
Eine für die Mischungen gemäß der Erfindung bevorzugte Klasse Polymerer, die flüssigkristalline Schmelzen bilden, ist beschrieben in US-A-4 161 470. Es handelt sich dabei um Naphthoyl-Copolyester mit Struktureinheiten der Formel I und II 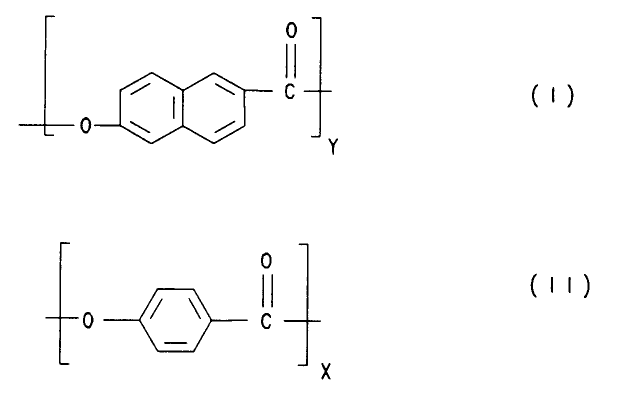
worin y und z ganze Zahlen größer als 1 bedeuten, und zumindest einige H-Atome ersetzt sein können durch einen Alkylrest mit 1 bis 4 Kohlenstoffatom, einen Alkoxyrest mit 1 bis 4 Kohlenstoffatomen und/oder einem Halogen. An anderer Stelle werden Copolyester beschrieben, die 10 bis 90 Molprozent Struktureinheiten der Formel III und 90 bis 10 Molprozent der Formel IV enthalten. Ein bevorzugter Copolyester enthält 25 bis 45 Molprozent Struktureinheiten der Formel III und 85 bis 55 Molprozent Struktureinheiten der Formel IV.

Weitere für die Mischungen gemäß der Erfindung bevorzugte flüssigkristalline Polyester sind in EP-A-0 278 066 und US-A-3 637 595 beschrieben. Diese Oxybenzoylcopolyester enthalten Struktureinheiten der Formeln III, IV und V 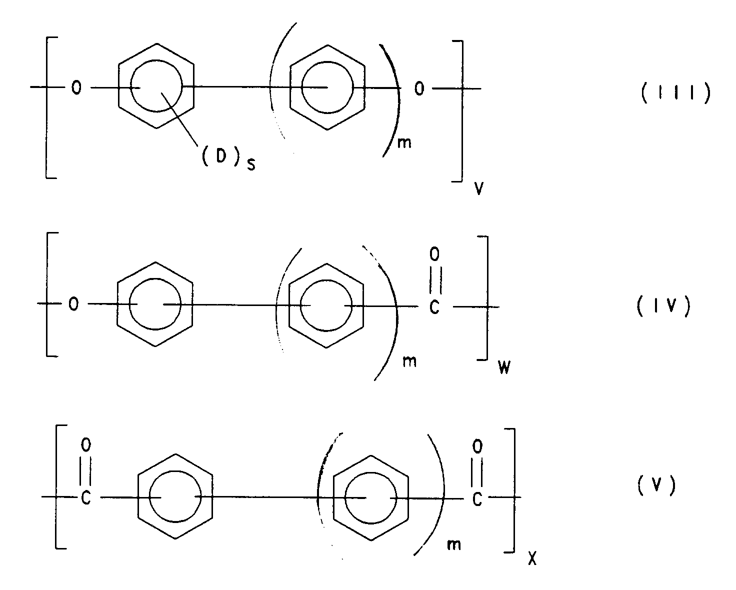
in unterschiedlichen Molverhältnissen wobei m 0 oder 1 ist, v, w und x ganze Zahlen größer als 1 sind, D ausgewählt ist aus einem Alkylrest mit 1 bis 4 Kohlenstoffatomen, einem Arylrest mit 6 bis 10 Kohlenstoffatomen, einem Alkylarylrest mit 6 bis 10 Kohlenstoffatomen oder einem Halogen und s eine ganze Zahl von 0 bis 4 bedeutet. Die Reste D sind unabhängig voneinander gleich oder verschieden. Die Summe von v, w und x beträgt bevorzugt 30 bis 600. Die Oxybenzoylcopolyester enthalten 0,6 bis 60 Molprozent Struktureinheiten der Formel III, 0,4 bis 98,5 Molprozent Struktureinheiten der Formel IV und 1 bis 60 Molprozent Struktureinheiten der Formel V, wobei sich die Anteile der Struktureinheiten der Formeln III, IV und V auf 100 Molprozent ergänzen. Bevorzugte Orybenzoylcopolyester enthalten 8 bis 48 Molprozent Struktureinheiten der Formel III, 5 bis 85 Molprozent Struktureinheiten der Formel IV und 8 bis 48 Molprozent Struktureinheiten der Formel V.

Für die Mischungen sind ebenfalls Copolyester geeignet, die nur Struktureinheiten der Formeln III und V enthalten. Diese flüssigkristallinen Polymere enthalten bevorzugt 40 bis 60 Molprozent der Struktureinheiten der Formel III und 60 bis 40 Molprozent Struktureinheiten der Formel V. Besonders bevorzugt ist ein Molverhältnis von 1 zu 1 der Struktureinheiten III und V. Solche Polyester werden zum Beispiel in US-A-4 600 765; US-A-4 614 790 und US-A-4 614 791 beschrieben. Weitere bevorzugte Copolyester enthalten eine oder mehrere der Struktureinheiten der Formeln III bis V. Für die Mischungen gemäß der Erfindung sind außerdem Copolyesteramide geeignet, die neben einer oder mehreren Struktureinheiten der Formeln I bis V noch zusätzlich mindestens eine Struktureinheit der Formel VI 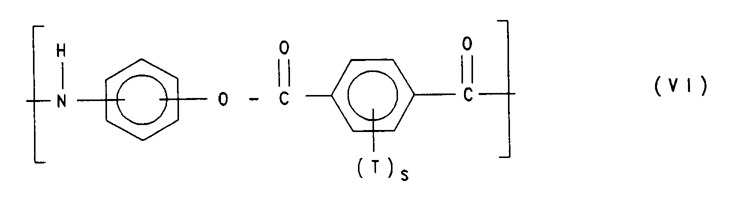
enthalten, worin T einen Alkylrest mit 1 bis 4 C-Atomen, einen Alkoryrest mit 1 bis 4 C-Atomen und/oder ein Halogen und s eine ganze Zahl von 0 bis 4 bedeutet.

Die in Legierungen gemäß der Erfindung enthaltenen Polyarylester können Polyestercarbonate sein, deren Synthesen beispielsweise in US 3,030,331; 3,169,121; beschrieben sind. Es handelt sich um Copolyester, enthaltend Carbonatgruppen, Carboxylatgruppen und aromatische Gruppen, wobei wenigstens einige der Carboxylgruppen und wenigstens einige der Carbonatgruppen direkt mit den Ring-Kohlenstoffatomen der aromatischen Gruppen verbunden sind. Diese Polymere werden üblicherweise hergestellt durch Reaktionen von difunktionellen Carbonsäuren mit Diphenolen und Carbonatprecusoren.

Die in Legierungen gemäß der Erfindung enthaltenen Polyarylester können auch solche sein, die abgeleitet sind aus wenigstens einem der oben beschriebenen Diphenole und wenigstens einer der oben beschriebenen aromatischen Dicarbonsäuren oder deren reaktiven Derivate.

Diese Polyarylester können dargestellt werden mittels einer der gut bekannten Polyester bildenden Reaktionen von Säurechloriden aromatischer Dicarbonsäuren mit Diphenolen oder durch Reaktion aromatischer Disäuren mit Diphenolen oder durch Reaktion von aromatischen Disäuren mit Diesterderivaten von Diphenolen oder durch Reaktion von Diphenolen mit aromatischen Dicarbonsäuren und Diarylcarbonaten. Solche Reaktionen sind beispielsweise in US 3,317,464; 3,395,119; 3,948,856; 3,780,148; 3,824,213 oder 3,133,898 beschrieben.

Diphenole zur Synthese von für die vorliegende Erfindung geeigneten Polyarylestern besitzen die allgemeine Formel 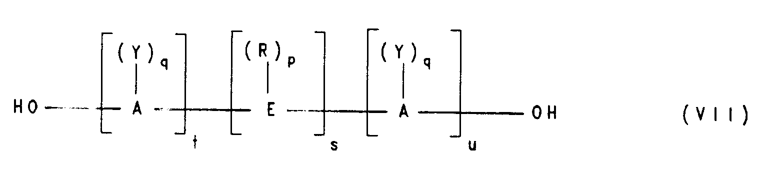
wobei A eine aromatische Gruppe bedeutet (Beispiel: Phenylen, Biphenylen oder Naphthylen) und E ein aliphatischer Kohlenwasserstoff-Rest ist.Geeignete Diphenole werden z.B. in der US-PS 3 169 121 beschrieben, auf die hier ausdrücklich Bezug genommen wird. Vorzugsweise bedeutet E Alkylen oder Alkyliden (Beispiel: Methylen, Ethylen, Isopropyliden). E kann auch aus zwei oder mehreren Alkylen- oder Alkyliden-Gruppen bestehen, die durch eine Nicht-Alkylen oder Nicht-Alkyliden-Gruppe verbunden sind, wie beispielsweise eine aromatische Gruppe, eine tertiäre Aminogruppe, eine Carbonylgruppe, eine Sulfidgruppe, eine Sulfoxidgruppe, eine Sulfongruppe oder eine Ethergruppe. Zusätzlich kann E eine cycloaliphatische Gruppe, eine Sulfidgruppe, eine Sulfoxidgruppe, eine Sulfongruppe, eine Etherbindung oder eine Carbonylgruppe darstellen.

R ist ausgewählt aus Wasserstoff, einer Alkylgruppe, insbesondere mit 1 bis 3 C-Atomen, einer Arylgruppe (C₆-C₁₂) oder einer cycloaliphatischen Gruppe, insbesondere mit 5 bis 6 C-Atomen. Y kann die Bedeutung von R haben oder ein Halogen oder eine Nitrogruppe sein. Die Indices s', t und u sind unabhängig voneinander Null oder eins. Die Indices q und p sind unabhängig voneinander Null oder eine ganze Zahl, die so groß ist, wie die maximal mögliche Zahl der Substituenten, die A und E tragen können. Vorzugsweise ist t = 1 und s' nicht größer als u.

Sofern mehrere der mit Y bezeichneten Substituenten vorhanden sind, können diese gleich oder verschieden sein. Dasselbe gilt für R. Die Hydroxylgruppen und Y an den aromatischen Resten können para- meta- oder ortho-verknüpft sein.

Bevorzugte Diphenole zur Herstellung der Polyarylester sind solche der Formel 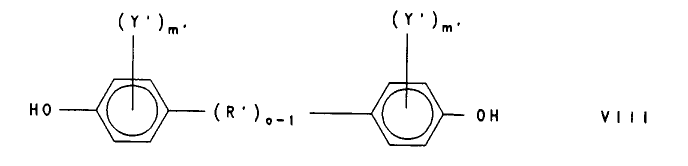
in der Y' Alkyl mit 1 bis 4 Kohlenstoffatomen, Cycloalkyl mit 6 bis 12 Kohlenstoffatomen oder Halogen, vorzugsweise Chlor oder Fluor bedeuten. Jedes m' ist unabhängig voneinander Null, 1,2,3,4, vorzugsweise null, R' ist Alkylen oder Alkyliden mit 1 bis 8, vorzugsweise 1 bis 4 Kohlenstoffatomen oder ein Arylenrest mit 6 bis 20, vorzugsweise 6 bis 12 Kohlenstoffatomen, insbesondere Alkyliden mit 3 Kohlenstoffatomen.

Die Diphenole können allein oder als Mischungen mindestens zweier Diphenole verwendet werden.

Aromatische Dicarbonsäuren zur Synthese von für die vorliegende Erfindung geeigneten Polyarylester besitzen die allgemeine Formel:

HOOC-R-COOH IX

wobei R ausgewählt ist aus den Gruppen 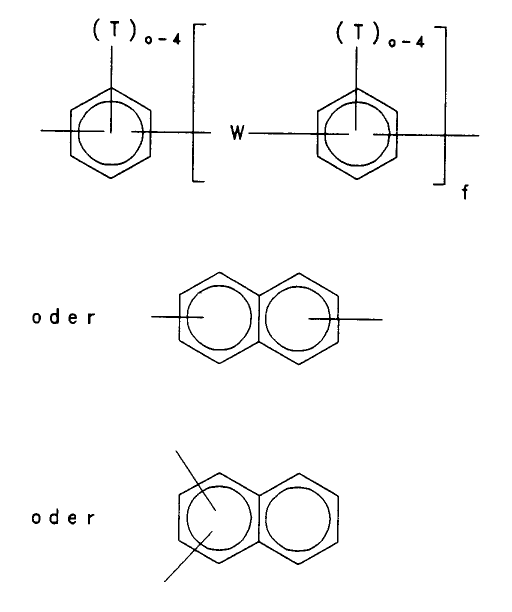
und
- f: für Null oder 1
- W: für O, SO₂, CO C(CH₃)₂, CH₂, S oder 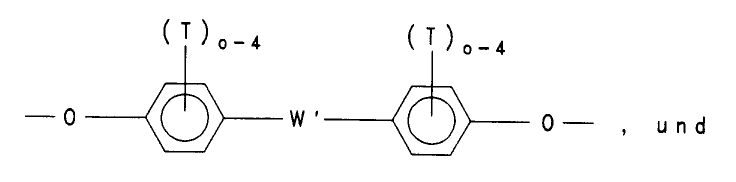
- W': für O, SO₂, CO, C(CH₃)₂, CH₂ oder S steht, und
- T: eine Alkylgruppe mit 1 bis 6 C-Atomen, vorzugsweise Methyl, Propyl, Butyl, oder Halogen, vorzugsweise F, Cl, Br bedeutet.

Bevorzugte aromatische Dicarbonsäuren sind Isophthalsäure, Terephthalsäure oder Mischungen der beiden. Es können auch bevorzugt reaktive Derivate aromatischer Dicarbonsäuren wie Terephthalsäurechlorid, Isophthalsäuredichlorid oder Mischungen der beiden eingesetzt werden.

Als Carbonatprecusoren zur Synthese der amorphen Polyestercarbonate sind u.a. Carbonylhalogenide, beispielsweise Carbonylchlorid, Carbonylbromid oder Phosgen und Carbonatester, beispielsweise Diphenylcarbonat verwendbar.

Die Staudingerindizes der verwendeten Polyarylester bzw. Polyarylestercarbonate liegen zwischen 0,1 und 2, vorzugsweise zwischen 0,3 und 1,5 und insbesondere zwischen 0,3 und 1 dl/g, gemessen bei 25°C in p-Chlorphenol, Methylenchlorid oder N-Methylpyrrolidon. Der Begriff Polyarylester, wie er hier verwendet wird, schließt Homopolymere, Copolymere, Terpolymere und Blockpolymere ein.

Der Anteil an amorphen Polyarylestern in den erfindungsgemäßen Polymerlegierungen beträgt bevorzugt 5 bis 50 Gew.-% und der Anteil an flüssigkristallinen Polyestern bevorzugt 95 bis 50 Gew.-%, wobei sich die Anteile der beiden Polymere auf die Summe der Polyester beziehen.

Die erfindungsgemäßen Mischungen können einen oder mehrere Polyarylester und einen oder mehrere flüssigkristalline Polyester enthalten. Die erfindungsgemäßen Mischungen werden durch für Thermoplasten bekannte Standardmethoden hergestellt und verarbeitet, wie z.B. durch Kneten, Extrusion, Pressen oder Spritzguß.

Aus US-A 4,792,587 sind zwar schon Legierungen bekannt, die aus einem flüssigkristallinem Copolyester oder Copolyesteramid und einem Polyarylester ("Polyarylat") bestehen. Daher enthält das Molekülskelett des Polyarylesters einen rigiden und einen flexiblen Anteil. Dagegen weist der Polyarylester der erfindungsgemäßen Legierung vorzugsweise keinen rigiden Anteil auf und ist insbesondere frei von Oxycarbonsäure-Anteilen.

Die erfindungsgemäßen Mischungen können Additive enthaften, beispielsweise thermische Stabilisatoren, UV-Stabilisatoren, Antistatika, Flammschutzmittel, Farbstoffe, Pigmente, anorganische und organische Füllstoffe, d.h. insbesondere auch verstärkende Zusätze wie Glas-, Kohle- oder Hochmodulfasern.

Die Mischungen können insbesondere vorteilhaft als Matrixmaterial für Verbundwerkstoffe eingesetzt werden. Sie eignen sich außerdem zur Herstellung von Formkörpern nach dem Spritzguß- oder Extrusionsverfahren, beispielsweise in Form von Platten, Fasern, Folien, Steckerleisten und Schläuchen.

In den Beispielen wurden folgende Materialien eingesetzt:
Flüssigkristalliner Copolyester A1 mit Struktureinheiten der Formel 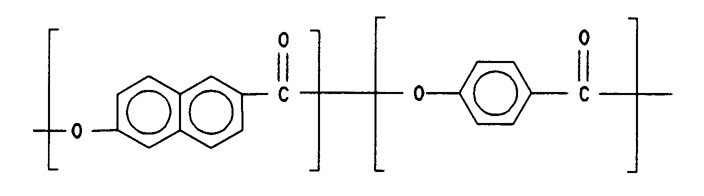
worin der Anteil der Oxynaphtoylstruktureinheiten 20 Mol-% und der Anteil der Oxybenzoyl-struktureinheiten 80 Mol-% beträgt. Ein derartiger Copolyester kann kommerziell unter der Bezeichnung ®Vectra C950 (Hoechst AG, Frankfurt aM., Bundesrepublik Deutschland) erworben werden.

Der eingesetzte Polyarylester B1 enthält Wiederholungseinheiten der Formel 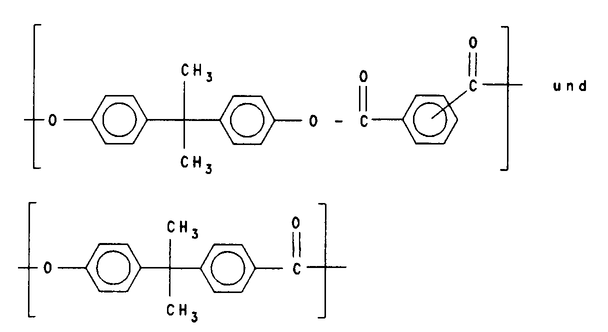
auf und besitzt einen Staudinger-Index von 0,7 dl/g (Chlorphenol, 25°C).

Die Materialien wurden zunächst getrocknet (140°C, 24 h) und anschließend in verschiedenen Gewichtsverhältnissen in einem Extruder LSM 30.34 GL der Firma Leistritz (Nürnberg, Bundesrepublik Deutschland) unter Schutzgas (Stickstoff) bei Temperaturen von 310°C bis 340°C extrudiert. Die so erhaltenen Mischungen wurden getrocknet (140°C, 24 h) und zu Formteilen wie Schulterstäben, Platten etc. spritzgegossen und auf ihre physikalischen und thermischen Eigenschaften hin untersucht. Dazu wurden eine Zug-Dehnungsmaschine der Firma Zwick, Ulm, (Bundesrepublik Deutschland) zur Bestimmung der Reißfestigkeit, der Reißdehnung und des Zug-E-Moduls und eine Biege-Dehnungsmaschine derselben Firma zur Bestimmung der Biegespannungen, der Randfaserdehnung und des Biege-E-Modus verwendet.

Die Anisotropieuntersuchung erfolgte an kleinen Zugstäben, die aus 2 mm dicken spritzgegossenen Platten ausgesägt wurden. Für den senkrechten Wert wurden Stäbe parallel zur Fließrichtung und für waagrechten Wert Stäbe senkrecht zur Fließrichtung herangezogen.

Reißfestigkeit und Zug-E-Modul werden in den Beispielen jeweils in Fließrichtung bestimmt.

### Beispiel 1

Mittels eines Zweischneckenextruders wurden der flüssigkristalline Copolyester A1 und der amorphe Polyarylester B1 nach intensiver Trocknung in unterschiedlichen Gewichtsverhältnissen gemeinsam unter Stickstoff extrudiert und granuliert. Die Granulate wurden anschließend nach intensiver Trocknung zu Schulter- und Schlagstäben spritzgegossen. Die Tabelle 1 zeigt die ermittelten mechanischen Eigenschaften der Mischungen.

**Tabelle 1**

| | A1 : B1 | | | |
|---|---|---|---|---|
| | 100:0 | 90:10 | 80:20 | 70:30 |
| Reißfestigkeit (MPa) (in Fließrichtung) | 155 | 152 | 86 | 80 |
| Anisotropieverhältnis (bei 2 mm-Platten) | 2,9 | 2,5 | 2,05 | 1,6 |
| Reißdehnung (%) | 3,3 | 2,2 | 1,5 | 1,5 |
| Zug-E-Modul (MPa) | 8530 | 10213 | 7400 | 6500 |
| Anisotropieverhältnis (bei 2 mm-Platten) | 2,9 | 2,4 | 1,7 | 1,9 |
| Biegespannung (3,5%) (MPa) | 135 | 163 | - | - |
| Biegefestigkeit (MPa) | 149 | 170 | 106 | 96 |
| Randfaserdehnung bei Höchstkraft | 7,0 | 4,4 | 2,4 | 2,6 |
| Biege-E-Modul (MPa) | 6920 | 8986 | 6041 | 5100 |

Die Tabelle belegt, daß bei Zusatz von steigenden Mengen an B1 zu A1 das Anisotropieverhältnis zurückgeht. Bei einem Gewichtsverhältnis A1:B1 von 90:10 sind überraschenderweise die Werte für Zug-E-Modul, Biege-E-Modul und Biegefestigkeit sogar höher als für reines A1.

### Beispiel 2

Die Ausgangsprodukte von Beispiel 1 wurden in unterschiedlichen Gewichtsverhältnissen gemischt. Jeweils 70 Gew.-Teile des erhaltenen Gemischs wurden mit 30 Gew.-Teilen Glasfaser versetzt und der Ansatz dann, wie in Beispiel 1, unter Stickstoff extrudiert, granuliert und zu Probekörpern weiterverarbeitet.

Tabelle 2 zeigt die ermittelten mechanischen Eigenschaften der Probekörper.

**Tabelle 2**

| | A1:B1 | | |
|---|---|---|---|
| | 100 : 0 | 90 : 10 | 80 : 20 |
| Reißfestigkeit (MPa) | 150 | 140.7 | 169 |
| Anisotropieverhältnis (bei 2 mm-Platten) | 2.6 | 2.3 | 2.3 |
| Reißdehnung % | 1.5 | 2.0 | 2.1 |
| Zug-E-Modul (MPa) | 14000 | 11000 | 13400 |
| Anisotropieverhältnis (bei 2 mm-Platten) | 2.7 | 2.4 | 2.3 |
| Biegespannung (MPa) | 190 | 180 | 211 |
| Biege-E-Modul (MPa) | 12200 | 10000 | 12300 |

## Patentansprüche

1. Polymerlegierung mit einem Gehalt an einem flüssigkristallinen aromatischen Polyester, dadurch gekennzeichnet, daß die Polymerlegierung aus 45 - 97 Gew.-% des flüssigkristallinen aromatischen Polyesters und 3 bis 55 Gew.-% (bezogen auf die Summe der Polyester) eines amorphen Polyarylesters besteht.

2. Polymerlegierung gemäß Anspruch 1, dadurch gekennzeichnet, daß der flüssigkristalline aromatische Polyester ein aromatisches Copolyesteramid ist.

3. Polymerlegierung gemäß Anspruch 1, dadurch gekennzeichnet, daß der flüssigkristalline aromatische Polyester sich von einer aromatischen Hydroxycarbonsäure ableitet.

4. Polymerlegierung nach Anspruch 3, dadurch gekennzeichnet, daß der flüssigkristalline aromatische Polyester aus den Einheiten I und II 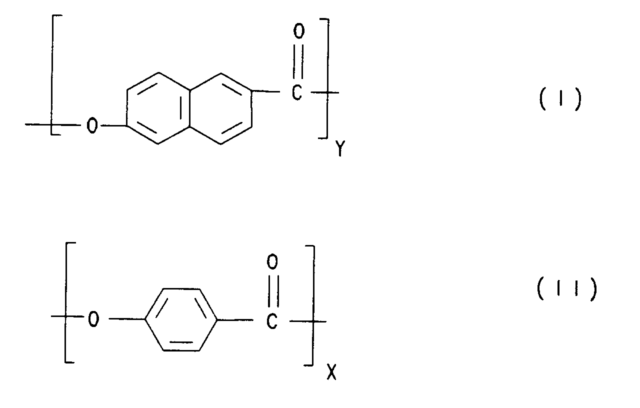 aufgebaut ist, wobei X und Y ganze Zahlen größer als 1 bedeuten.

5. Polymerlegierung gemäß Anspruch 3, dadurch gekennzeichnet, daß der flüssigkristalline aromatische Polyester aus den Einheiten III, IV und V 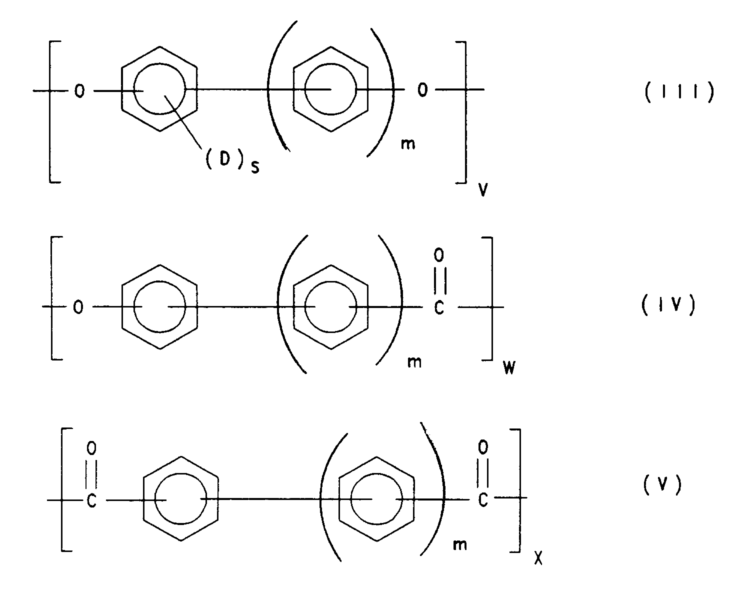 zusammengesetzt ist, wobei
D einen Alkylrest mit 1 bis 4 C-Atomen, einen Arylrest mit 6 bis 10 C-Atomen, einen Alkarylrest mit 6 bis 10 C-Atomen oder ein Halogenradikal,
s 0 oder 1,
m unabhängig von einander 0 oder 1 und
v, w und x ganze Zahlen größer als 1
bedeuten.

6. Polymerlegierung gemäß Anspruch 1, dadurch gekennzeichnet, daß der flüssigkristalline aromatische Polyester aus den Einheiten III und V aufgebaut ist.

7. Polymerlegierung gemäß Anspruch 2, dadurch gekennzeichnet, daß das flüssigkristalline aromatische Copolyesteramid aus den Einheiten I,II und VI 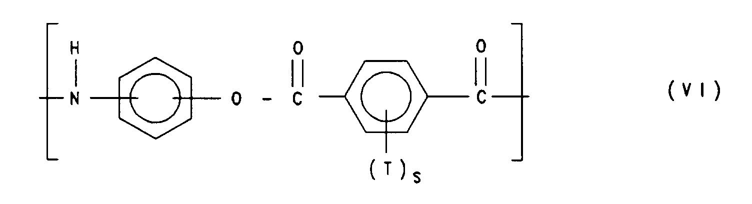 aufgebaut ist, wobei T einen Halogenrest, C₁-C₄-Alkyl und/oder C₁-C₄-Alkoxy und s 0,1,2,3 oder 4 bedeutet.

8. Polymerlegierung gemäß Anspruch 2, dadurch gekennzeichnet, daß das flüssigkristalline aromatische Copolyesteramid aus den Einheiten III, V, VI und gegebenenfalls IV aufgebaut ist.

9. Polymerlegierung gemäß Anspruch 1, dadurch gekennzeichnet, daß der amorphe Polyarylester aus aromatischen Dicarbonsäure-Einheiten, Diphenol-Einheiten und gegebenenfalls Carbonat-Einheiten aufgebaut ist.

10. Polymerlegierung nach Anspruch 9, dadurch gekennzeichnet, daß die Diphenol-Einheit die allgemeine Formel VII 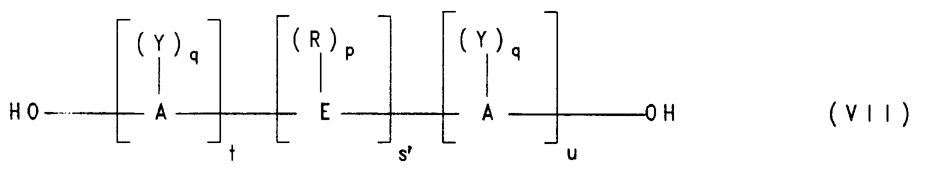 aufweist,
wobei
A eine aromatische Gruppe
E eine Alkylen- oder Alkyliden-Gruppe, eine Cycloalken-Gruppe, wie S-, SO-, SO₂-, CO- oder O-Gruppe oder mindestens zwei Alkylen- oder Alkylidengruppen, die durch eine Nichtalkylen- oder Nichtalkyliden-Brücke verbunden sind,
R Wasserstoff, eine C₁-C₃-Alkylgruppe, eine Arylgruppe oder Cycloalkylgruppe,
Y Wasserstoff, eine C₁-C₃-Alkylgruppe, eine Arylgruppe oder Cycloalkylgruppe, eine Nitrogruppe oder ein Halogenatom,
t, s', u unabhängig voneinander 0 oder 1,
q null oder eine ganze positive Zahl, die der maximal möglichen Zahl von Substituenten an A entspricht oder kleiner ist,
p null oder eine ganze positive Zahl, die der maximal möglichen Zahl von Substituenten an E entspricht oder kleiner ist,
bedeuten.

11. Polymerlegierung gemäß Anspruch 10, dadurch gekennzeichnet, daß die Diphenol-Einheit die allgemeine Formel VIII 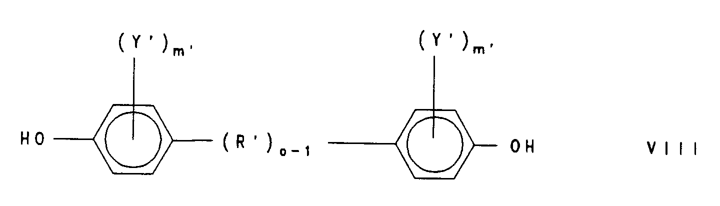 aufweist,
wobei
Y' Alkyl mit 1 bis 4 C-Atomen, Cycloalkyl mit 6 bis 12 C-Atomen oder Halogen
R' Alkylen oder Alkyliden mit 1 bis 8 C-Atomen oder Arylen mit 6 bis 20 C-Atomen und
m' 0,1,2,3 oder 4
bedeutet.

12. Polymerlegierung nach Anspruch 9, dadurch gekennzeichnet, daß die aromatische Dicarbonsäure Isophthalsäure oder Terephthalsäure ist.

13. Polymerlegierung gemäß Anspruch 1, dadurch gekennzeichnet, daß sie aus 97 bis 85 Gew.-% des flüssigkristallinen aromatischen Polyesters und 3 bis 15 Gew.-% des amorphen Polyarylesters (bezogen auf die Summe der Polyester) besteht.
